# EUROPÄISCHE PATENTSCHRIFT

(11) **EP 1 279 852 B1**
(45) Veröffentlichungstag und Bekanntmachung des Hinweises auf die Patenterteilung: **07.12.2005**
(21) Anmeldenummer: 02016558.5
(22) Anmeldetag: 24.07.2002
(51) Int. Cl.: F16D 65/06

(54) **Bremsklotzsohlenrücken**
Brake backplate
Support d'un sabot de frein

(30) Priorität: 25.07.2001 DE 20112275 U
(43) Veröffentlichungstag der Anmeldung: 29.01.2003
(73) Patentinhaber: Hartmann GmbH Import-Export-Consulting, 61440 Oberursel/Taunus (DE)
(72) Erfinder: Hartmann, Hans, 61440 Oberursel (DE)
(74) Vertreter: TBK-Patent

(56) Entgegenhaltungen:
- EP-A- 0 962 678
- EP-A- 1 096 168
- GB-A- 821 293
- GB-A- 2 253 448
- US-A- 1 349 129

## Beschreibung

Die Erfindung bezieht sich auf einen Bremsklotzsohlenrücken im Allgemeinen und insbesondere auf einen Bremsklotzsohlenrücken für eine Außenbackenbremse von einem Schienenfahrzeug.

Aus der DE-OS-26 16553 ist ein Bremsklotzschuh für eine Außenbackenbremse von einem Schienenfahrzeug bekannt, bei der eine Bremsklotzsohle (Reibmaterial) auf der Rückseite von einem aus einer Metallplatte gebildeten Bremsklotzsohlenrücken verstärkt wird, der ein mittig angeordnetes Verankerungselement aufweist, mit dem der Bremsklotzschuh schwenkbar am Fahrzeug verankert werden kann.

Es hat sich herausgestellt, dass sich ein solcher mittig gehaltener Bremsklotzsohlenrücken mit der darin aufgenommenen Bremsklotzsohle trotz Verankerung verdrehen kann, sodass sich die Enden des Bremsklotzsohlenrückens nicht mehr in einer Linie mit dem Radumfang befinden. Dadurch kann der Bremsklotzschuh unter Umständen mit dem Radkranz in Kontakt kommen und ungewollt für Verschleiß sorgen. Außerdem entstehen störende Geräusche.

Zur Lösung dieses Problems wurden Bremsklotzsohlenrücken mit Führungselementen eingeführt, die das Verdrehen des Bremsklotzsohlenrückens im Zusammenwirken mit entsprechenden Gegenelementen am Fahrzeug verhindern sollen.

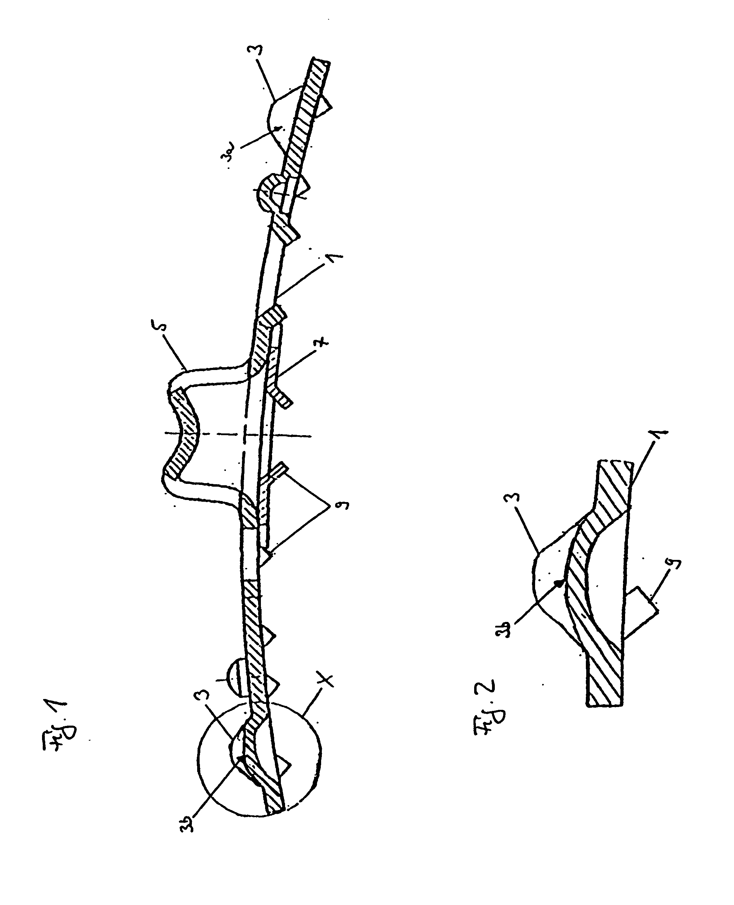

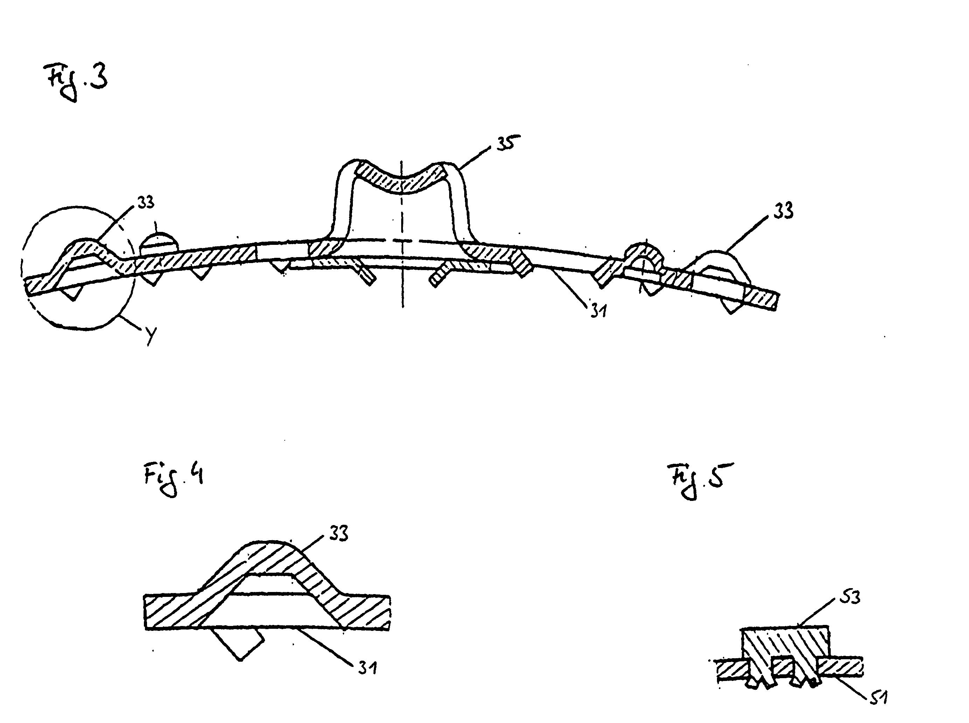

So ist zum Beispiel ein Bremsklotzsohlenrücken in Gebrauch, wie er in Fig. 3 im Querschnitt gezeigt ist. Dieser Bremsklotzsohlenrücken ist aus einer Metallplatte 31 gebildet und weist auf der von der Bremsklotzsohlenaufnahme abgewandten Seite (in der Zeichnung oben) auf beiden Seiten eines Verankerungselement 35 jeweils zwei Führungselemente 33 auf. Diese Führungselement 33 befinden sich in Längsrichtung der Metallplatte 31 auf gleicher Höhe und dienen dazu, ein Verdrehen des Bremsklotzsohlenrückens bezüglich der Außenbacke eines Fahrzeugrads zu verhindern. In Fig. 3 verläuft der Schnitt in der linken Hälfte der Zeichnung durch das vordere der beiden Führungselement 33 hindurch, während er in der rechten Hälfte der Zeichnung durch die Mitte der Metallplatte 31, d.h. zwischen den beiden Führungselementen 33 hindurchläuft.

Wie insbesondere aus Fig. 4 hervorgeht, in der die in Fig. 3 mit Y bezeichnete Einzelheit vergrößert wiedergegeben ist, sind die Führungselemente 33 brückenförmig gestaltet. Diese Brückenform wird erreicht, indem in die Metallplatte 31 für jedes Führungselement 33 zwei Längsschlitze eingebracht werden und das Material zwischen diesen Schlitzen durch Umformen herausgehoben wird.

Die brückenförmigen Führungselemente 33 haben jedoch eine verhältnismäßig geringe Festigkeit und es besteht die Gefahr, dass sie aufgrund der Dauerbelastungen im Betriebseinsatz herausbrechen können. Darüber hinaus bilden die brückenförmigen Führungselemente 33 einen Durchgang zur Bremsklotzsohle, durch den bei der Verbindung von Bremsklotzsohle und Bremsklotzsohlenrücken flüssiges Reibmaterial austreten kann, das mühsam durch Reinigen entfernt werden muss.

Eine Alternative zu der in den Figuren 3 und 4 gezeigten Ausgestaltung der Führungselemente ist in der Querschnittansicht von Fig. 5 gezeigt. In diesem Fall wird das Führungselement durch ein separates Bauelement 53 gebildet, das mit Hilfe von Zapfen mit der Metallplatte 51 des Bremsklotzsohlenrückens verstemmt oder an den Enden verschweißt wird. Allerdings stellt auch diese Ausgestaltung keine zufriedenstellende Lösung dar.

Darüber hinaus ist aus der US 1,349,129 ein Bremsklotzsohlenrücken gemäß dem Oberbegriff des Anspruchs 1 bekannt, bei dem an den beiden Enden einer Metallplatte durch Auswölben ein Paar über die gesamte Breite der Metallplatte verlaufender, gleichmäßig hoher Führungselemente ausgebildet ist. Die Seitenflächen der Führungselemente sind teilweise nach innen zurückgesetzt, sodass die Führungselemente in Aufsicht ein T-förmiges Profil haben.

Der Erfindung liegt die Aufgabe zugrunde, einen Bremsklotzsohlenrücken insbesondere für eine Außenbackenbremse von einem Schienenfahrzeug zur Verfügung zu stellen, bei dem mit einfachen Mitteln eine stabile Führung erzielt wird.

Die obige Aufgabe wird durch einen Bremsklotzsohlenrücken gelöst, der wie in Anspruch 1 definiert aufgebaut ist. Die Unteransprüche geben vorteilhafte Weiterbildungen an.

Die Erfindung wird im Folgenden genauer anhand des in den Figuren 1 und 2 gezeigten Ausführungsbeispiels beschrieben.

Wie in der Querschnittansicht von Fig. 1 gezeigt ist, ist der Bremsklotzsohlenrücken aus einer Metallplatte 1 gebildet, die aus einem etwa 5 mm dicken Stahlwerkstoff wie St W 22 besteht und die bei einer Länge von rund 25 cm eine Breite von rund 8 cm hat. Die Metallplatte 1 ist entsprechend der Außenbacke eines Fahrzeugrads in Längsrichtung gekrümmt. Die Abmessungen können natürlich je nach Radtyp variieren.

Die Metallplatte 1 ist in ihrer Mitte durch Kaltumformen zu einem schleifenförmigen Verankerungselement 5 ausgeformt, mit dem der Bremsklotzsohlenrücken am Fahrzeug verankert wird. Die sich nach innen öffnende Seite des Verankerungselements 5 wird von einem etwa 3 mm dicken Metallblech 7 aus vorzugsweise dem gleichen Werkstoff wie die Metallplatte 1 abgeschlossen, das mit der Metallplatte 1 verschweißt ist. Die von dem Verankerungselement 5 abgewandte Seite der Metallplatte 1 und des Metallblechs 7 weisen Vorsprünge 9 auf, die als Bremsklotzsohlenaufnahme dienen.

Auf der zur Bremsklotzsohlenaufnahme entgegengesetzten Seite der Metallplatte 1 befindet sich zu beiden Seiten des Verankerungselements 5 am längsseitigen Ende der Metallplatte 1 ein Paar Führungselemente 3, das dazu dient, ein Verdrehen des Bremsklotzsohlenrückens bezüglich der Außenbacke des Fahrzeugrads zu verhindern. In Fig. 1 verläuft der Schnitt in der linken Hälfte der Zeichnung durch die Mitte des Führungselements 3 hindurch, während er in der rechten Hälfte der Zeichnung vor dem Führungselement 3 entlang läuft.

Die beiden Führungselemente 3 haben die Form einer Auswölbung und weisen jeweils zwei plane Seitenflächen 3a auf, die sich senkrecht zu der durch die Metallplatte 1 definierten Ebene in Längsrichtung der Metallplatte 1 erstrecken. Mit diesen Seitenflächen 3a wirken die entsprechenden Gegenelemente am Fahrzeug zusammen, um das Verdrehen des Bremsklotzsohlenrückens zu verhindern.

Die Seitenflächen 3a sollten eine Mindesthöhe von etwa 8 mm haben, um für eine ausreichende Führung sorgen zu können.

Wie insbesondere in Fig. 2 zu erkennen ist, in der die in Fig. 1 mit X bezeichnete Einzelheit vergrößert dargestellt ist, sind die Seitenflächen 3a der Führungselemente 3 über eine sattelförmige Fläche 3b miteinander verbunden. Die Sattelfläche 3b hat in Längsrichtung der Metallplatte 1 eine zur Metallplatte hin abfallende Parabelform und in Breitenrichtung der Metallplatte 1 eine zu den beiden Seitenflächen 3a hin ansteigende Parabelform, wobei sich der Kreuzungspunkt der beiden Parabeln ungefähr in der Flächenmitte des Führungselements 3 befindet. Durch diese sattelförmige Ausgestaltung werden die Seitenflächen 3a von innen abgestützt und können auf Dauer größeren Kräften widerstehen.

Die Führungselemente 3 sind in Breitenrichtung der Metallplatte 1 länger ausgeführt als in Längsrichtung der Metallplatte 1. Dadurch können die auf die Seitenflächen 3a der Führungselemente 3 wirkenden Kräfte noch besser auf das dazwischen befindliche abstützende Material verteilt werden.

Die Führungselemente 3 werden vorzugsweise durch Kaltumformen aus der Metallplatte 1 herausgewölbt. Durch das Kaltumformen wird eine Materialverfestigung erreicht, durch die die Stabilität der Führungselemente 3 weiter erhöht wird. Dieser Kaltumformvorgang kann zusammen mit den anderen Umformvorgängen der Metallplatte 1 in einem Arbeitsschritt erfolgen. Für das Kaltumformen eignet sich ein übliches Grobstanzverfahren, das keinen besonderen Beschränkungen unterliegt.

Es wird darauf hingewiesen, dass nicht nur die Führungselemente 3 selbst, sondern auch der Übergangsbereich der Führungselemente 3 zur Metallplatte keine Materialaussparungen aufweist und dass die Führungselemente 3 somit insgesamt eine geschlossene Oberfläche haben. Das heißt, dass anders als beispielsweise bei dem in den Figuren 3 und 4 gezeigten Stand der Technik im Bereich der Führungselemente 3 kein Durchgang zwischen der Ober- und Unterseite der Metallplatte 1 besteht, der die Festigkeit der Führungselemente 3 beeinträchtigen könnte und durch den bei der Verbindung von Bremsklotzsohle und Bremsklotzsohlenrücken unter Umständen flüssiges Reibmaterial austreten könnte, das mühsam durch Reinigen entfernt werden muss.

Dadurch, dass die Führungselemente 3 eine Auswölbung der Metallplatte 1 sind, bilden sie mit der Metallplatte 1 eine durchgängige Einheit. Im Gegensatz zu dem in Fig. 5 gezeigten Stand der Technik werden daher Befestigungsstellen vermieden, die die Festigkeit der Führungselemente 3 verringern könnten und zu höheren Herstellungskosten führen.

Die in den Figuren 1 und 2 gezeigte Gestaltung der Führungselemente 3 mit den planen Seitenflächen 3a und der Verbindungssattelfläche 3b ist besonders vorteilhaft. Allerdings ist es bei geeigneter konstruktiver Gestaltung des Bremsklotzsohlenrückens und der Gegenelemente am Fahrzeug auch möglich, statt dem Paar Führungselemente 3 nur ein Führungselement oder mehr als zwei Führungselemente einzusetzen.

## Patentansprüche

1. Bremsklotzsohlenrücken insbesondere für eine Außenbackenbremse von einem Schienenfahrzeug, der aus einer Metallplatte (1) gebildet ist und der auf der von einer Bremsklotzsohlenaufnahme abgewandten Seite ein Verankerungselement (5) zur Verankerung des Bremsklotzsohlenrückens am Fahrzeug und mindestens ein Führungselement (3) zur Verhinderung eines Verdrehens des Bremsklotzsohlenrückens bezüglich der Außenbacke eines Fahrzeugsrads aufweist,
wobei das Führungselement (3) eine Auswölbung der Metallplatte (1) mit einer auch im Übergangsbereich zur Metallplatte geschlossenen Oberfläche ist und das Führungselement (3) zwei plane Seitenflächen (3a) aufweist, die sich senkrecht zur durch die Metallplatte (1) definierten Ebene in Längsrichtung der Metallplatte (1) erstrecken,
**dadurch gekennzeichnet, dass**
die beiden Seitenflächen (3a) des Führungselements (3) über eine sattelförmige Fläche (3b) verbunden sind.

2. Bremsklotzsohlenrücken nach Anspruch 1, bei dem die Seitenflächen (3a) eine Höhe von mindestens 8 mm zur durch die Metallplatte (1) definierten Ebene haben.

3. Bremsklotzsohlenrücken nach Anspruch 1 oder 2, bei dem das Führungselement (3) in Breitenrichtung der Metallplatte (1) länger als in Längsrichtung der Metallplatte (1) ist.

4. Bremsklotzsohlenrücken nach einem der vorangehenden Ansprüche, bei dem das Führungselement (3) durch Kaltumformen herausgewölbt ist.

5. Bremsklotzsohlenrücken nach einem der vorangehenden Ansprüche, der ein Paar Führungselemente (3) aufweist, das zu beiden Seiten des Verankerungselements (5) angeordnet ist.

## Claims

1. A brake shoe backing, in particular for an external-shoe brake of a rail vehicle, which backing is formed from a metal plate (1) and comprises on the side remote from a brake shoe seating a fastening element (5) for fastening the brake shoe backing to the vehicle and at least one guide element (3) for preventing twisting of the brake shoe backing relative to the external shoe of a vehicle wheel,
the guide element (3) being an arched portion of the metal plate (1) with a continuous surface even in the transitional zone to the metal plate and the guide element (3) comprising two plane side faces (3a) which extend in the longitudinal direction of the metal plate perpendicularly to the plane defined by the metal plate (1),
**characterised in that**
the two side faces (3a) of the guide element (3) are joined by a saddle-shaped surface (3b).

2. A brake shoe backing according to claim 1, in which the side faces (3a) have a height of at least 8 mm relative to the plane defined by the metal plate (1).

3. A brake shoe backing according to claim 1 or claim 2, in which the guide element (3) is longer in the widthwise direction of the metal plate (1) than in the lengthwise direction of the metal plate (1).

4. A brake shoe backing according to any one of the preceding claims, in which the guide element (3) is arched outwards by cold forming.

5. A brake shoe backing according to any one of the preceding claims which comprises a pair of guide elements (3) arranged on either side of the fastening element (5).

## Revendications

1. Support d'un sabot de frein en particulier pour un frein à mâchoire extérieure d'un véhicule sur rails, lequel est constitué d'une plaque de métal (1) et lequel comporte du côté opposé à un logement de sabot de frein un élément d'ancrage (5) pour ancrer le support de sabot de frein au véhicule et au moins un élément de guidage (3) pour empêcher une torsion du support de sabot de frein par rapport à la mâchoire extérieure d'une roue de véhicule, l'élément de guidage (3) étant un bombement de la plaque de métal (1) avec une surface fermée également dans la zone de transition en direction de la plaque de métal et l'élément de guidage (3) comportant deux surfaces latérales planes (3a) qui s'étendent perpendiculairement au plan défini par la plaque de métal (1) dans le sens longitudinal de la plaque de métal (1), **caractérisé en ce que** les deux surfaces latérales (3a) de l'élément de guidage (3) sont reliées par le biais d'une surface en forme de selle (3b).

2. Support d'un sabot de frein selon la revendication 1, dans lequel les surfaces latérales (3a) ont une hauteur d'au moins 8 mm par rapport au plan défini par la plaque de métal (1).

3. Support d'un sabot de frein selon la revendication 1 ou 2, dans lequel l'élément de guidage (3) est plus long dans le sens de la largeur de la plaque de métal (1) que dans le sens de la longueur de la plaque de métal (1).

4. Support d'un sabot de frein selon l'une des revendications précédentes, dans lequel l'élément de guidage (3) est bombé par formage à froid.

5. Support d'un sabot de frein selon l'une des revendications précédentes, lequel comporte une paire d'éléments de guidage (3), laquelle est disposée des deux côtés de l'élément d'ancrage (5).
